# EUROPÄISCHE PATENTANMELDUNG

(11) **EP 2 194 303 A1**
(43) Veröffentlichungstag der Anmeldung: **09.06.2010**
(21) Anmeldenummer: 08405299.2
(22) Anmeldetag: 05.12.2008
(51) Int. Cl.: F16L 9/22, F16L 43/00

(54) **Medienführendes Bauelement zur Umlenkung eines Medienstroms**

(71) Anmelder: R. Nussbaum AG, 4601 Olten (CH)
(72) Erfinder: Zeiter, Patrik, 4853 Riken (CH); Bobst, Urs, 4703 Kestenholz (CH)
(74) Vertreter: Rüfenacht, Philipp Michael

(57) **Zusammenfassung**

Ein medienführendes Bauelement (200) zur Umlenkung eines Medienstroms ist aus mindestens zwei Teilschalen (210, 220) gebildet, welche druckfest aneinander befestigt sind. Mindestens eine Befestigungsstelle zwischen den Teilschalen (210, 220) erstreckt sich durchgehend von einer ersten Öffnung des Bauelements bis zu einer zweiten Öffnung des Bauelements. Die Teilschalen (210, 220) für ein derartiges Bauelement lassen sich durch Spritzgiessen oder Warmpressen herstellen. Bei dieser Geometrie können zudem medienführende Bauelemente zur Umlenkung eines Medienstroms, z. B. T-Stücke oder 90°-Winkel, mit Biegungen anstelle von Winkeln versehen werden, wodurch eine substanzielle Reduktion des Druckverlusts erreicht werden kann.

## Beschreibung

### Technisches Gebiet

Die Erfindung betrifft ein medienführendes Bauelement zur Umlenkung eines Medienstroms sowie Fittings und Armaturen mit einem solchen Bauelement. Die Erfindung betrifft weiter ein Verfahren zur Herstellung eines solchen medienführenden Bauelements.

### Stand der Technik

Medienführende Bauelemente zur Umlenkung eines Medienstroms, insbesondere einer Flüssigkeit oder eines Gases, sind bekannt. So kommen in der Trinkwasserversorgung oder in Heizungssystemen beispielsweise Fittings in der Form von Winkelstücken oder T-Stücken zum Einsatz. Viele Armaturen, z. B. solche mit Absperr-, Regel- und/oder Ventilfunktion, lenken den jeweiligen Medienstrom ebenfalls um. Solche Bauelemente sind oft aus Kunststoff, aus Metall oder aus Verbundwerkstoffen hergestellt. Deren Herstellung kann im Fall von Metallen (wie z. B. Kupfer oder Rotguss und anderen Kupferlegierungen) durch Umformen oder Giessen mit Sandkernen erfolgen, während Kunststoffteile in der Regel durch Spritzgiessen herges tellt werden. Das Spritzgussverfahren ist schnell und vergleichsweise kostengünstig, setzt allerdings der Formgebung der herzustellenden Teile gewisse Grenzen, da es möglich sein muss, die verwendeten Kerne nach dem Giessen aus dem fertigen Teil herauszuziehen (Entformen). Durch Spritzgiessen gefertigte medienführende Bauelemente zur Umlenkung eines Medienstroms weisen deshalb in der Regel von den Öffnungen ausgehende gerade Abschnitte auf, die sich im gewünschten Winkel treffen und somit eine "Ecke" bilden. Komplexe Bauelemente werden oft durch Aneinanderfügen von mehreren medienführenden Teilen gefertigt.

In letzter Zeit ist - insbesondere in Bezug auf Trinkwasserleitungen und Rohrleitungen von Heizungsanlagen - das Bewusstsein dafür gewachsen, dass Druckverluste in diesen Leitungen möglichst vermieden werden sollten. Bei Trinkwasserleitungen können Druckverluste zu nicht tolerierbaren Temperaturschwankungen führen. Bei Heizungssystemen führen Druckverluste in den Rohrleitungen dazu, dass höhere Pumpenleistungen benötigt werden und dass somit der Energiebedarf des Heizungssystems gesteigert ist.

Der durch einen bestimmten Abschnitt eines Leitungssystems bewirkte Druckverlust hängt nicht zuletzt von den verwendeten Fittings und Armaturen ab. Generell können zudem besonders bei der Umlenkung eines Medienstroms Druckverluste auftreten. In diesem Zusammenhang zeigen Untersuchungen, dass sich in einem Winkel treffende Abschnitte (wie bei Kunststoff-Bauteilen üblich) grössere Druckverluste verursachen als gleichmässig gebogene Rohrabschnitte (wie sie z. B. durch Giessen mit Sandkernen bei Metallteilen herstellbar sind). Simulationen der Anmelderin haben beispielsweise ergeben, dass bei einem Bogenstück mit 16 mm Innendurchmesser bei einer Durchflussmenge von 24 l/min ein Widerstandsbeiwert ζ (Zeta) von 0.38 resultiert, während er bei einem Winkelstück derselben Dimensionen, aber mit im Winkel aneinanderstossenden Abschnitten 1.04 beträgt. Der Druckverlust ist also in diesem Fall fast dreimal so gross. Die kostengünstigen, durch Spritzgiessen gefertigten Kunststoffbauelemente führen somit im Vergleich zu optimal geformten Bauelementen aus Metall zu einem deutlich höheren Druckverlust.

### Darstellung der Erfindung

Aufgabe der Erfindung ist es, ein dem eingangs genannten technischen Gebiet zugehörendes medienführendes Bauelement zu schaffen, welches kostengünstig herstellbar ist und die Herstellung von Rohrleitungen mit geringen Druckverlusten ermöglicht.

Die Lösung der Aufgabe ist durch die Merkmale des Anspruchs 1 definiert. Gemäss der Erfindung ist das Bauelement aus mindestens zwei Teilschalen gebildet, welche druckfest aneinander befestigt sind. Dabei erstreckt sich mindestens eine Befestigungssstelle zwischen den Teilschalen durchgehend von einer ersten Öffnung des Bauelements bis zu einer zweiten Öffnung des Bauelements.

Durch die Verwendung von Teilschalen, welche derart geformt sind, dass sie sich entlang einer derartigen Befestigungsstelle aneinander befestigen lassen, werden ein einfaches Entformen von beispielsweise durch Spritzgiessen oder Thermoformen hergestellten Kunststoffteilen bzw. durch Warmpressen hergestellten Metallteilen sowie die Herstellung von rohrartigen Teilen mit Biegungen und Hinterschnitten in axialer Richtung ermöglicht. Gleichzeitig wird im Rahmen der Erfindung die Verwendung einfacher geformter Werkzeuge ermöglicht, wodurch die Herstellung zusätzlich vereinfacht werden kann. Insbesondere die Möglichkeit, bei dieser Geometrie medienführende Bauelemente zur Umlenkung eines Medienstroms (z. B. T-Stücke, 90°-Winkel) mit Biegungen anstelle von Winkeln zu versehen, erlaubt eine substanzielle Reduktion des Druckverlusts. Analoge Optimierungen zur Reduktion des Druckveriusts lassen sich auch bei Armaturen vornehmen, in welchen der Medienstrom umgelenkt wird. Es ist in diesem Zusammenhang anzumerken, dass die erfindungsgemässen Vorteile nicht erreicht werden, wenn lediglich um den oder die Medienströme umlaufende Befestigungsstellen vorgesehen werden, wie sie beispielsweise bei der stirnseitigen Befestigung zweier rohrartiger (und damit bereits an sich medienführender) Teile geschaffen werden.

Die Befestigung der Teilschalen aneinander erfolgt derart, dass das medienführende Bauelement die geforderten Innendrucke aushalten kann, so beträgt ein auszuhaltender Mindestdruck für die Befestigung z. B. mindestens 10 bar, bevorzugt mindestens 16 bar gemäss Standard PN16. Die Verbindung soll nach Möglichkeit auch heisswasserbeständig sein bis mindestens 70 °C, bevorzugt bis mindestens 95 °C.

Bei bevorzugten Ausführungsformen wird das Bauelement aus genau zwei Halbschalen zusammengesetzt. Dadurch können die notwendigen Verbindungsstellen minimiert werden. Gleichzeitig können die meisten bei medienführenden Bauelementen gewünschten und einen geringen Druckverlust erlaubenden Geometrien durch kostengünstige Verfahren wie Spritzgiessen realisiert werden.

Statt zweier Halbschalen können auch drei oder mehr Teilschalen druckdicht zusammengefügt werden. Dadurch kann eine noch höhere Gestaltungsfreiheit bei der Geometrie des herzustellenden Bauelements erreicht werden.

Das erfindungsgemässe medienführende Bauelement kann insbesondere als Fitting, also als Verbindungsstück für eine Rohrleitung, ausgebildet sein bzw. den medienführenden Teil eines Fittings bilden. Das Fitting kann als Winkelstück ausgebildet sein, wobei im Bereich der Umlenkung ein medienführender Kanal des Winkelstücks eine kontinuierlich gebogene Form aufweist und so einen minimalen Druckverlust gewährleistet. Das medienführende Bauelement kann ebenfalls als Armatur, insbesondere mit einer Absperr-, Regel- und/oder Ventilfunktion, ausgebildet oder Teil einer solchen sein, insbesondere das Armaturengehäuse.

Das erfindungsgemässe Bauelement wird hergestellt, indem zunächst die mindestens zwei Teilschalen hergestellt werden und indem diese Teilschalen anschliessend entlang der mindestens einen Befestigungssstelle aneinander druckfest befestigt werden.

Bei einer ersten bevorzugten Ausführungsform der Erfindung sind die Teilschalen miteinander verschweisst, d. h. die Befestigungsstelle ist eine durchgehende Schweissnaht. Diese kann beispielsweise analog zu einer Rohrlängsnaht verlaufen. Schweissverfahren können automatisiert und damit kostengünstig durchgeführt werden. Sie sind zur Herstellung druckfester und heisswasserbeständiger Verbindungen bei einer Vielzahl von Materialien (darunter Metalle und thermoplastische Kunststoffe) geeignet.

Ein geeignetes Schweissverfahren bildet dabei das Ultraschallschweissen, welches insbesondere zum Fügen von thermoplastischen Kunststoffen geeignet ist. An der Schweissstelle wird das Material durch Zuführen von Wärme aufgeschmolzen oder zumindest erweicht, indem es mit einer hochfrequenten mechanischen Schwingung (Ultraschall) beaufschlagt wird. Die zum Schweissen notwendige Wärme entsteht somit in den zu verbindenden Bauteilen durch Molekular- und Grenzflächenreibung. Das Ultraschallschweissen zeichnet sich durch sehr geringe Schweisszeiten und eine hohe Wirtschaftlichkeit aus.

Im Zusammenhang mit dem Fügen durch Ultraschallschweissen ist es von Vorteil, wenn mindestens eine der Teilschalen an der gegenseitigen Befestigungsstelle der Teilschalen einen Materialabschnitt aufweist, welcher derart ausgebildet und angeordnet ist, dass er während des Ultraschallverschweissens zerschmolzen wird. Er kann so die Befestigung der Teilschalen aneinander leisten. Die miteinander zusammenwirkenden Konturen der Teilschalen werden in der Regel derart ausgebildet sein, dass der Materialabschnitt bzw. die Materialabschnitte im Vergleich zu genau zusammenpassenden Konturen übersteht bzw. überstehen. Im Rahmen des Ultraschallschweissverfahrens wird durch gezieltes Zerschmelzen des Materialabschnitts bzw. der Materialabschnitte sowie gegebenenfalls durch Anschmelzen der diese kontaktierenden Region der anderen Teilschale die gegenseitige Befestigung der Teilschalen erreicht.

Ein anderes geeignetes Schweissverfahren stellt das Laserschweissen dar. Das Laserschweissen bzw. Laserstrahlschweissen ist besonders zum Verschweissen von Bauteilen aus thermoplastischen Kunststoffen geeignet, die mit hoher Schweissgeschwindigkeit, schmaler und schlanker Schweissnahtform und mit geringem thermischem Verzug gefügt werden sollen. Die Zuführung eines Zusatzwerkstoffes ist in der Regel nicht notwendig.

Das Laserschweissen von Kunststoffen findet meist im Überlappverfahren statt. Dabei werden zwei unterschiedliche Schweisspartner verwendet. Der obere ist für die verwendete Laserwellenlänge transparent. Durch diesen strahlt der Laser hindurch. Aufgrund der Transparenz erhitzt er sich kaum. Der untere Schweisspartner muss die Strahlung absorbieren. Dazu kann zum Beispiel eine Beigabe von absorbierenden Partikeln (z. B. ca. 0,3 Gew.-% Russ) beitragen. Dieser Stoff nimmt die Energie auf, beginnt zu schmelzen und gibt dabei seine Temperatur auch an den oberen Partner weiter. Damit der Energieübergang und ein Materialkontakt stattfindet, müssen beide Partner oft zusammengepresst werden, zumindest jedoch passgenau zueinander sein. Durch das Zusammenfliessen der beiden Stoffe kann so eine Schweissnaht hergestellt werden.

Damit das Fügen durch Laserschweissen erleichtert wird, weisen die Teilschalen an ihrer gegenseitigen Befestigungsstelle mit Vorteil aussen liegende Flanschabschnitte auf. Diese können durch die Laserschweissung einfach miteinander verbunden werden, da so vermieden wird, dass die Laserstrahlung dickere Materialabschnitte wie die Rohrwandung selbst durchdringen muss.

Andere Geometrien des Befestigungsbereichs sind auch möglich, in Abhängigkeit der Geometrie des Bauelements, dem verwendeten Material und der eingesetzten Laserstrahlung.

Neben dem Ultraschall- und Laserschweissen sind zudem auch andere Schweissverfahren einsetzbar, die die Herstellung einer druckdichten Naht erlauben.

Alternativ sind die Teilschalen miteinander verklebt. Die Befestigungsstelle ist somit durch eine durchgehende Klebung gebildet. Auch Klebeverfahren sind zur Herstellung druckfester und heisswasserbeständiger Verbindungen bei einer Vielzahl von Materialien (darunter Metalle, Kunststoffe und Verbundmaterialien) geeignet. Einsetzbare Klebstoffe umfassen (in Abhängigkeit der verwendeten Materialien) Substanzen auf der Basis von Epoxidharzen, Polyurethanen, Phenolharzen oder Silikonkleber. Die Teilschalen lassen sich (wiederum in Abhängigkeit der verwendeten Materialien) auch durch den Einsatz von Lösemitteln (wie z. B. Dichlormethan etc.) miteinander verkleben.

Die Festigkeit der Verbindung zwischen den Teilschalen lässt sich durch eine geeignete Kontur der Befestigungsflächen, z. B. durch eine Nut-Feder-Kombination, sowohl im Rahmen von Schweiss- als auch von Klebeverfahren noch erhöhen.

Die Teilschalen können aus Kunststoff bestehen. Besonders geeignet sind die technischen Kunststoffe PPSU, PPA, PVDF, PSU und PPS. Einsetzbar sind aber auch andere Kunststoffe, insbesondere Thermoplaste. Die Kunststoffe können mit langfasrigen oder kurzfasrigen Glasfasern oder anderen Fasermaterialien verstärkt sein. Die genannten Kunststoffmaterialien lassen sich insbesondere durch Spritzgiessen bearbeiten. Es kann von Vorteil sein, Kombinationen verschiedener Kunststoffe einzusetzen; entsprechende Teile können beispielsweise in einem Zweikomponenten-Spritzverfahren gefertigt werden. Dichtelemente können z. B. aus EPDM oder TPE gefertigt und so ausgeführt sein, dass auch sie beim Zusammensetzen der Teilschalen aus mehreren Teilen zusammengesetzt werden.

Mindestens eine der Teilschalen kann auch aus Metall bestehen, z. B. aus Edelstahl, Kupfer, Messing, Rotguss oder Bronze. Die Teilschale wird dabei bevorzugt durch Warmpressen (Gesenkformen) geformt. Dabei wird ein erwärmter Rohling, der schon in etwa die Form bzw. die Größe des späteren Schmiedeteils hat, in das sogenannte Untergesenk gelegt. Von oben schlägt das Obergesenk auf den Rohling und formt ihn zum gewünschten Schmiedestück, wobei allenfalls mehrere Arbeitstakte hintereinander ausgeführt werden. Einteilige Gewinde-Einsätze, insbesondere solche aus Metall können ein- bzw. angeschweisst werden. Dadurch kann eine erhöhte Stabilität erreicht werden.

Dank der erfindungsgemässen Herstellung des medienführenden Bauelements aus mehreren Teilschalen können nun auch mit Hilfe dieses Bearbeitungsverfahrens Bauelemente mit geringem Druckverlust gefertigt werden.

Aus der nachfolgenden Detailbeschreibung und der Gesamtheit der Patentansprüche ergeben sich weitere vorteilhafte Ausführungsformen und Merkmaiskombinationen der Erfindung.

### Kurze Beschreibung der Zeichnungen

Die zur Erläuterung des Ausführungsbeispiels verwendeten Zeichnungen zeigen:
- Fig. 1: einen Querschnitt durch eine erste Ausführungsform eines erfindungsgemässen Winkelstücks in einer Axialebene;
- Fig. 2: ein Schrägbild des erfindungsgemässen Winkelstücks gemäss der ersten Ausführungsform;
- Fig.3: einen Querschnitt des erfindungsgemässen Winkelstücks gemäss der ersten Ausführungsform in einer Radialebene;
- Fig. 4A, B: einen radialen Querschnitt durch eine zweite Ausführungsform eines erfindungsgemässen Winkelstücks; und
- Fig. 5A, B: Detaildarstellungen eines radialen Querschnitts durch die beiden Teilschalen einer dritten Ausführungsform eines erfindungsgemässen Winkelstücks.

Grundsätzlich sind in den Figuren gleiche Teile mit gleichen Bezugszeichen versehen.

### Wege zur Ausführung der Erfindung

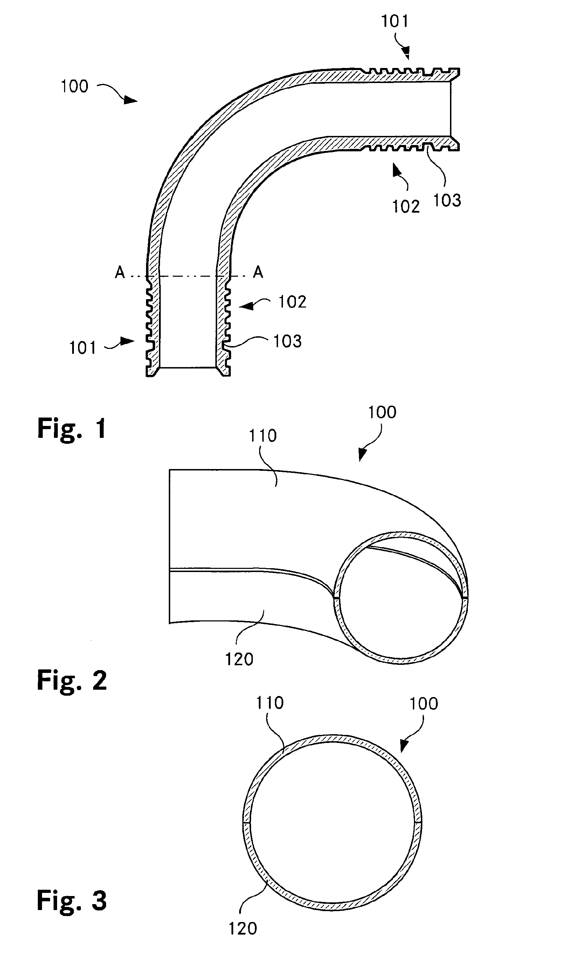

Die Figur 1 zeigt einen Querschnitt durch eine erste Ausführungsform eines erfindungsgemässen Winkelstücks in einer Axialebene. Beim Winkelstück 100 handelt es sich um einen 90°-Winkel der Nennweite 16 mm. Er ist aus PPSU (Polyphenylsulfon) hergestellt. Er ist druckbeständig bis mindestens 10 bar sowie heisswasserbeständig bis mindestens 70 °C und wird beispielsweise im Rahmen der Trinkwasserversorgung, z. B. in der Etagenverteilung, oder in Heizsystemen eingesetzt. An seinen Enden ist jeweils eine Presskontur 101 ausgebildet. Diese umfasst mehrere aussenseitige Profilierungen 102 sowie eine Aufnahme 103 für einen Dichtring. Die mit dem Winkelstück 100 miteinander zu verbindenden Rohre werden zusammen mit einer sie umgebenden Presshülse auf die Presskonturen 101 aufgeschoben. Mittels eines entsprechenden Presswerkzeugs wird die Presshülse auf das Rohr aufgepresst, dieses verformt sich, und zwischen der Profilierung 102 bzw. dem in der Aufnahme 103 befindlichen Dichtring und dem Rohr wird eine druckdichte Verbindung geschaffen. Der Innenquerschnitt des Winkelstücks 100 ist überall kreisförmig, die zentrale Achse verläuft entlang eines Viertelkreises. Der Innenquerschnitt weist somit keinerlei Kanten oder Ecken auf, welche zu Verwirbelungen führen könnten.

Aus der Figur 2, die ein Schrägbild des entlang der in der Figur 1 eingezeichneten radialen Ebene A-A aufgeschnittenen Winkelstücks 100 zeigt, ist ersichtlich, dass das Winkelstück aus zwei Halbschalen 110, 120 mit halbkreisförmigem Querschnitt zusammengesetzt ist. Die Halbschalen wurden durch Spritzgiessen aus PPSU hergestellt und sind entlang ihrer axialen Kanten druckdicht miteinander verklebt, z. B. mittels eines Klebesystems auf der Basis von Epoxidharzen. Die Figur 3 zeigt einen Querschnitt durch das zusammengefügte Winkelstück in einer Radialebene.

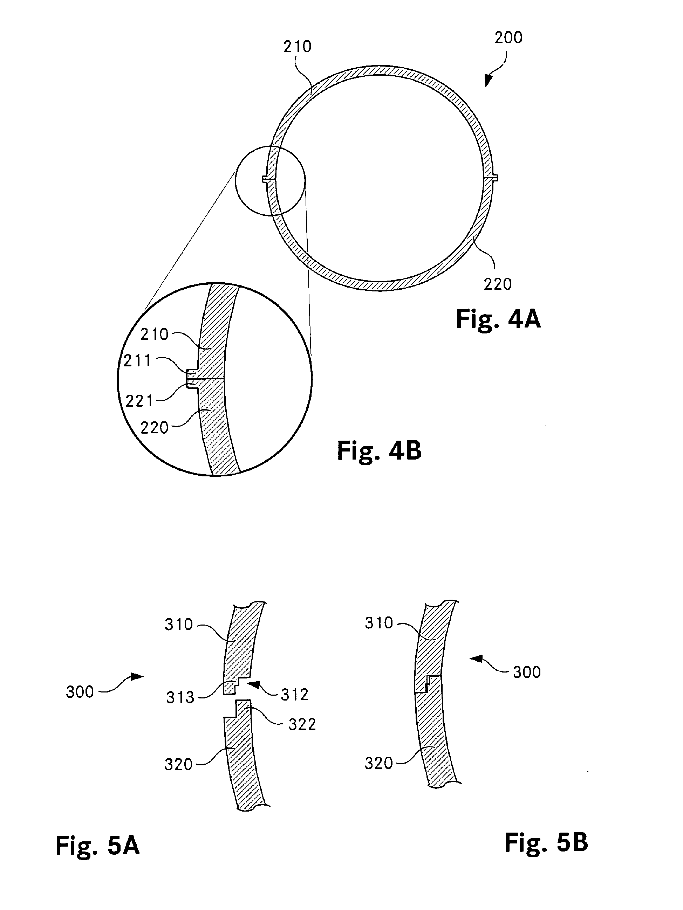

Die Figur 4A zeigt einen radialen Querschnitt durch eine zweite Ausführungsform eines erfindungsgemässen Winkelstücks 200, die Figur 4B ist eine Detaildarstellung der Befestigungsstelle zwischen den Halbschalen. Die Geometrie des Winkelstücks 200 entspricht weitgehend derjenigen der ersten Ausführungsform. Im Unterschied dazu sind jedoch die beiden Halbschalen 210, 220 nicht miteinander verklebt, sondern durch Laserschweissen verbunden. Dazu weisen die Halbschalen 210, 220 entlang ihrer axialen Kanten nach aussen vorstehende Flansche 211, 221 auf. Die obere Halbschale 210 ist für die verwendete Laserstrahlung transparent, während das Material der unteren Halbschale 220 mit 0.3 Gew. % Russpartikeln versetzt ist. Im Rahmen des Laserschweissprozesses wird ein Laserstrahl durch den Flansch 211 der oberen Halbschale 210 in den Flansch 221 der unteren Halbschale 220 eingestrahlt. Die Russpartikel absorbieren im Rahmen des Laserschweissprozesses die Laserstrahlung und das Material der unteren Halbschale 220 und indirekt auch dasjenige der oberen Halbschale 210 wird erhitzt, so dass im Kontaktbereich der beiden Flansche 211, 221 eine axial durchgehende Schweissnaht ausgebildet wird.

Die Figuren 5A, 5B sind Detaildarstellungen eines radialen Querschnitts durch die beiden Teilschalen einer dritten Ausführungsform eines erfindungsgemässen Winkelstücks, wobei die Figur 5A die Situation vor dem Fügen und die Figur 5B die Situation nach dem Fügen zeigt. Wiederum weist das Winkelstück 300 im Wesentlichen dieselbe Geometrie auf wie die ersten zwei Ausführungsformen. Die Verbindung zwischen den beiden Halbschalen 310, 320 erfolgt nun aber mittels eines Ultraschallschweissverfahrens.

Zu diesem Zweck weisen die Halbschalen 310, 320 entlang ihrer axialen Kanten besondere Konturen auf. Diese entsprechen im Wesentlichen einer Nut-Feder-Verbindung, wobei in der oberen Teilschale im Bereich der Innenseite eine Nut 312 und in der unteren Teilschale im Bereich der Innenseite eine Feder 322 ausgebildet sind. Im Hinblick auf das Ultraschall-Schweissverfahren ist zudem innerhalb der Nut 312 der oberen Halbschale 310 ein vorstehender Absatz 313 mit einer scharfen Kante ausgebildet.

Zum Fügen der beiden Halbschalen 310, 320 werden diese aufeinander zu bewegt, wobei die Feder 322 der unteren Halbschale 320 in die Nut 312 der oberen Halbschale 310 eingreift und den Absatz 313 kontaktiert. Mittels einer Sonotrode werden in an sich bekannter Weise die Halbschalen 310, 320 mit Ultraschallschwingungen beaufschlagt. Die scharfe Kante des Absatzes 313 gewährleistet eine gezielte Energieeinleitung. An der Berührungsstelle des Absatzes 313 mit der Feder 322 der unteren Halbschale 320 wird das Kunststoffmaterial aufgeschmolzen. Mit einem vorgegebenen Fügedruck von z. B. 3 N/mm² werden die Halbschalen 310, 320 weiter aufeinander zu bewegt, bis der Absatz 313 vollständig zerschmolzen ist und die Stirnfläche der Feder 322 auf dem Grund der Nut 312 aufliegt. Die Figur 5B zeigt den schliesslich erreichten Zustand.

Bei den vorstehend dargestellten Schweissverfahren kann es notwendig oder sinnvoll sein, anschliessend einen entstandenen Grat zu entfernen. Dies kann in an sich bekannter Weise gesehen, z. B. durch Schleifen oder Abschneiden.

Die Erfindung ist nicht auf die dargestellten Ausführungsbeispiele beschränkt. So können die Halbschalen auch aus anderen Kunststoffen, Metallen oder Verbundmaterialien gefertigt sein. Metallische Teile werden dabei mit Vorteil durch Warmpressen hergestellt. Anstelle von zwei Halbschalen können zudem auch drei oder mehrere Teilschalen zu einem medienführenden Bauelement zusammengefügt werden. Neben Winkelstücken lassen sich auch T-Stücke oder Armaturen gemäss der vorliegenden Erfindung fertigen. Diese Bauelemente können anstelle von Pressanschlüssen auch mit anderen Anschlüssen versehen sein, z. B. für Schraub-, Klemm- oder Steckverbindungen. Je nach Anwendungszweck und Anschlussart kann ein Stütznippel vorgesehen sein oder nicht.

Detailaspekte der konkret beschriebenen Schweissverfahren, z. B. die verwendete Nahtgeometrie oder Betriebsparameter, können anders gewählt werden. Ähnlicherweise können andersartige Klebstoffe zum Schaffen einer Klebeverbindung eingesetzt werden.

Zusammenfassend ist festzustellen, dass durch die Erfindung ein medienführendes Bauelement geschaffen wird, welches kostengünstig herstellbar ist und die Herstellung von Rohrleitungen mit geringen Druckverlusten ermöglicht.

## Patentansprüche

1. Medienführendes Bauelement (100; 200; 300) zur Umlenkung eines Medienstroms, **dadurch gekennzeichnet, dass** es aus mindestens zwei Teilschalen (110, 120; 210, 220; 310, 320), insbesondere aus genau zwei Halbschalen, gebildet ist, welche druckfest aneinander befestigt sind, wobei sich mindestens eine Befestigungsstelle zwischen den Teilschalen (110, 120; 210, 220; 310, 320) durchgehend von einer ersten Öffnung des Bauelements bis zu einer zweiten Öffnung des Bauelements (100; 200; 300) erstreckt.

2. Medienführendes Bauelement nach Anspruch 1, **dadurch gekennzeichnet, dass** die Teilschalen (210, 220; 310, 320) miteinander verschweisst sind.

3. Medienführendes Bauelement nach Anspruch 2, **dadurch gekennzeichnet, dass** die Teilschalen (310; 320) miteinander ultraschallverschweisst sind.

4. Medienführendes Bauelement nach Anspruch 3, **dadurch gekennzeichnet, dass** mindestens eine der Teilschalen (310) an der gegenseitigen Befestigungsstelle der Teilschalen (310, 320) einen Materialabschnitt (313) aufweist, welcher derart ausgebildet und angeordnet ist, dass er während des Ultraschallverschweissens zerschmolzen wird und die Befestigung der Teilschalen (310, 320) aneinander schafft.

5. Medienführendes Bauelement nach Anspruch 2, **dadurch gekennzeichnet, dass** die Teilschalen (210, 220) miteinander laserverschweisst sind.

6. Medienführendes Bauelement nach Anspruch 5, **dadurch gekennzeichnet, dass** die Teilschalen (210, 220) an ihrer gegenseitigen Befestigungsstelle aussen liegende Flanschabschnitte (211, 221) aufweisen, welche durch die Laserschweissung miteinander verbunden sind.

7. Medienführendes Bauelement nach Anspruch 1, **dadurch gekennzeichnet, dass** die Teilschalen (110, 120) miteinander verklebt sind.

8. Medienführendes Bauelement nach einem der Ansprüche 1 bis 7, **dadurch gekennzeichnet, dass** die Teilschalen (110, 120; 210, 220; 310, 320) aus Kunststoff, insbesondere PPSU, PPA, PVDF, PSU oder PPS, bestehen.

9. Medienführendes Bauelement nach Anspruch 1 oder 7, **dadurch gekennzeichnet, dass** die Teilschalen aus Metall, insbesondere Edelstahl, Kupfer, Messing, Rotguss oder Bronze, bestehen und insbesondere durch Warmpressen geformt sind.

10. Fitting, umfassend ein medienführendes Bauelement nach einem der Ansprüche 1 bis 9.

11. Fitting nach Anspruch 10, **dadurch gekennzeichnet, dass** es als Winkelstück (100; 200; 300) ausgebildet ist, wobei im Bereich der Umlenkung ein medienführender Kanal des Winkelstücks (100; 200; 300) eine kontinuierlich gebogene Form aufweist.

12. Armatur, insbesondere mit einer Absperr-, Regel- und/oder Ventilfunktion, umfassend ein medienführendes Bauelement nach einem der Ansprüche 1 bis 9.

13. Verfahren zur Herstellung eines medienführenden Bauelements nach einem der Ansprüche 1 bis 9, **dadurch gekennzeichnet, dass** mindestens zwei Teilschalen (110, 120; 210, 220; 310, 320) hergestellt werden , insbesondere genau zwei Halbschalen, und dass diese Teilschalen (110, 120; 210, 220; 310, 320) anschliessend entlang mindestens einer Befestigungsstelle, welche sich zwischen den Teilschalen (110, 120; 210, 220; 310, 320) durchgehend von einer ersten Öffnung des Bauelements (100; 200; 300) bis zu einer zweiten Öffnung des Bauelements (100; 200; 300) erstreckt, aneinander druckfest befestigt werden.
